# EUROPEAN PATENT APPLICATION

(11) **EP 4 714 835 A1**
(43) Date of publication of application: **25.03.2026**
(21) Application number: 24201795.2
(22) Date of filing: 20.09.2024
(51) Int. Cl.: B64U 10/13, H04W 4/021

(54) **METHOD FOR USING A SERVICE ENABLER ARCHITECTURE LAYER FOR VERTICALS, SEAL, AND AN UNCREWED AERIAL SYSTEM APPLICATION ENABLER LAYER, UAE LAYER, WITH AN UNCREWED AERIAL SYSTEM APPLICATION SPECIFIC LAYER IMPLEMENTATION FOR MANAGING NO-TRANSMISSION ZONE COMMUNICATION AND/OR FOR PROVIDING NO-TRANSMISSION ZONE INFORMATION TO AT LEAST ONE UNCREWED AERIAL SYSTEM USER EQUIPMENT, SYSTEM OR TELECOMMUNICATIONS NETWORKS, UNCREWED AERIAL SYSTEM USER EQUIPMENT, PROGRAM AND COMPUTER-READABLE MEDIUM**

(71) Applicant: Deutsche Telekom AG, 53113 Bonn (DE)
(72) Inventor: ALEKSIEV, Vasil, 1030 Wien (AT)
(74) Representative: Schwöbel, Thilo K.

(57) **Abstract**

The invention relates to a method for using a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to at least one uncrewed aerial system user equipment,
wherein a service enabler architecture layer server, an uncrewed aerial system application enabler server, and a uncrewed aerial system application specific server and used are the at least one uncrewed aerial system user equipment comprises, respectively, an uncrewed aerial system application specific client, an uncrewed aerial system application enabler client, and a service enabler architecture layer client,
wherein, in order for managing no-transmission zone communication and/or for providing no-transmission zone information to the at least one uncrewed aerial system user equipment, the method comprises the following steps:
-- in a first step, the uncrewed aerial system application specific server communicates with the uncrewed aerial system application enabler server,
-- in a second step, the uncrewed aerial system application enabler server communicates with the uncrewed aerial system application enabler client.

## Description

### BACKGROUND

The present invention relates a method for using a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to at least one uncrewed aerial system user equipment, wherein a service enabler architecture layer server, an uncrewed aerial system application enabler server, and an uncrewed aerial system application specific server are used.

Additionally, the present invention relates to a system or to a telecommunications networks for using a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to at least one uncrewed aerial system user equipment, wherein a service enabler architecture layer server, an uncrewed aerial system application enabler server, and a uncrewed aerial system application specific server are used.

Additionally, the present invention relates to an uncrewed aerial system user equipment for being used with a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to the uncrewed aerial system user equipment, wherein a service enabler architecture layer server, an uncrewed aerial system application enabler server, and a uncrewed aerial system application specific server are used.

Furthermore, the present invention relates to a program and to a computer-readable medium for using a user equipment in the framework of service enabler architecture layer for verticals according to the inventive method.

In conventionally known mobile communication network, it is known to use uncrewed aerial systems (or, unmanned aerial systems) - in the context of the present invention used synonymously with the term uncrewed aerial vehicles - such as, e.g., drones. Uncrewed aerial vehicles (UAVs), i.e. drones, require specific functionality, and 5G systems are able to provide specific support for these types of devices. One very important issue is that of compliance to local regulation, and an important regulation is that of no-transmission zones (NTZs). Transmission using certain frequencies at certain locations are protected and/or not allowed to be used according to local regulation. Furthermore, NTZs can be additionally and/or complementary restricted in their applicability in terms of height and/or time validity. The reasons for these limitations are typically to protect radio-based equipment from interference, such as radars (e.g. military, civil, weather) or radioastronomy telescopes. When entering such no-transmission zone or no-transmission areas (hereinafter also called no-transmit zones), a drone, or uncrewed aerial vehicle (or uncrewed aerial system), must comply with local regulations; after it leaves the no-transmit zone, it can then again normally transmit on the frequencies that were restricted in the no-transmission zone.

The present invention provides enhancements to the 5G system to better support no-transmit zones, especially regarding how to configure the entities involved in view of and in order to implement policies related to no-transmission zones.

### SUMMARY

An object of the present invention is to provide a technically simple, effective and cost-effective solution for using a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to at least one uncrewed aerial system user equipment. A further object of the present invention is to provide a corresponding system or a corresponding telecommunications networks or a corresponding user equipment, and a corresponding program and computer-readable medium.

The object of the present invention is achieved by a method for using a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to at least one uncrewed aerial system user equipment, wherein a service enabler architecture layer server, an uncrewed aerial system application enabler server, and a uncrewed aerial system application specific server are used and the at least one uncrewed aerial system user equipment comprises, respectively, an uncrewed aerial system application specific client, an uncrewed aerial system application enabler client, and a service enabler architecture layer client, wherein, in order for managing no-transmission zone communication and/or for providing no-transmission zone information to the at least one uncrewed aerial system user equipment, the method comprises the following steps:
-- in a first step, the uncrewed aerial system application specific server communicates with the uncrewed aerial system application enabler server,
-- in a second step, the uncrewed aerial system application enabler server communicates with the uncrewed aerial system application enabler client.

According to the present invention, it is advantageously possible that the uncrewed aerial system application specific server and the uncrewed aerial system application enabler server supports managing no-transmission zone communication and/or providing no-transmission zone information to the at least one uncrewed aerial system user equipment. Hence, the use of the at least one uncrewed aerial system user equipment is able to be improved according to the present invention.

According to the present invention, it is especially possible to support and provide no-transmission zone communication and/or no-transmission zone information especially to uncrewed aerial system user equipments, and to use a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to at least one uncrewed aerial system user equipment via a telecommunications network, especially a mobile communication network. According to the present invention, a service enabler architecture layer server, an uncrewed aerial system application enabler server, and a uncrewed aerial system application specific server are used. Furthermore according to the present invention, the at least one uncrewed aerial system user equipment comprises, respectively, an uncrewed aerial system application specific client, an uncrewed aerial system application enabler client, and a service enabler architecture layer client. According to the present invention, it is furthermore especially preferred that service enabler architecture layer for verticals comprises the (or one) service enabler architecture layer server (and, especially, the service enabler architecture layer client(s)), and/or the uncrewed aerial system application enabler layer comprises the (or one) uncrewed aerial system application enabler server (and, especially, the uncrewed aerial system application enabler client(s)), and/or the uncrewed aerial system application specific layer implementation comprises the (or one) uncrewed aerial system application specific server (and, especially, the uncrewed aerial system application specific client(s)). In order to manage no-transmission zone communication and/or to provide no-transmission zone information to the at least one uncrewed aerial system user equipment, the method comprises the following steps:
-- in a first step, the uncrewed aerial system application specific server communicates with the uncrewed aerial system application enabler server,
-- in a second step, the uncrewed aerial system application enabler server communicates with the uncrewed aerial system application enabler client.

This advantageously provides the possibility, according to the present invention, to provide procedures, service flows and APIs such as to manage no-transmission zone communication and/or to provide no-transmission zone information to at least one uncrewed aerial system user equipment.

According to the present invention, it is furthermore advantageously possible and preferred that the communication between the uncrewed aerial system application specific server and the uncrewed aerial system application enabler server comprises
-- a no-transmission zone management request message that is transmitted by the uncrewed aerial system application specific server and received by the uncrewed aerial system application enabler server, and
-- a no-transmission zone management response message and a no-transmission zone management complete message that are transmitted by the uncrewed aerial system application enabler server and received by the uncrewed aerial system application specific server,
wherein especially, the communication between the uncrewed aerial system application specific server and the uncrewed aerial system application enabler server comprises an no-transmission zone notification message that is transmitted by the uncrewed aerial system application enabler server and received by the uncrewed aerial system application specific server.

It is thereby advantageously possible to realize and implement the inventive method in a comparatively simple and efficient manner.

Furthermore, it is advantageously possible and preferred according to the present invention that the communication between the uncrewed aerial system application enabler server and the uncrewed aerial system application enabler client comprises
-- a no-transmission zone configuration request message that is transmitted by the uncrewed aerial system application enabler server and received by the uncrewed aerial system application enabler client, and
-- a no-transmission zone configuration response message that is transmitted by the uncrewed aerial system application enabler client and received by the uncrewed aerial system application enabler server.

It is thereby advantageously possible to realize and implement the inventive method in a comparatively simple and efficient manner.

According to the present invention, it is furthermore advantageously possible and preferred that the no-transmission zone management request message comprises:
-- an uncrewed aerial system application specific server identifier information, UASS ID,
-- an information regarding, or indicating, an area for deactivation transmission and a specific altitude,
-- a specific time window for deactivating the transmission,
-- an information regarding, or indicating, frequency bands,
-- a reporting configuration information,
wherein the no-transmission zone management request message optionally comprises:
-- an no-transmission zone policy management container.

It is thereby advantageously possible to realize and implement the inventive method in a comparatively simple and efficient manner.

Furthermore, it is advantageously possible and preferred according to the present invention that the no-transmission zone management response message comprises a management response result information, especially indicating a positive or negative result of the no-transmission zone management request message and/or wherein the no-transmission zone management complete message comprises a management complete result information, especially indicating a positive or negative result of no-transmission zone configuration.

It is thereby advantageously possible to efficiently realize and implement the inventive method in a comparatively simple and flexible manner.

Furthermore, it is advantageously possible and preferred according to the present invention that the no-transmission zone configuration request message comprises:
-- uncrewed aerial system identifier information,
-- an information regarding, or indicating, an area for deactivation transmission, and a specific altitude,
-- a specific time window for deactivating of transmission,
-- an information regarding, or indicating, frequency bands,
-- a reporting configuration information,
wherein the no-transmission zone configuration request message optionally comprises:
-- an no-transmission zone configuration information.

It is thereby advantageously possible to realize and implement the inventive method in a comparatively simple and efficient manner.

Furthermore, it is advantageously possible and preferred according to the present invention that the no-transmission zone configuration response message comprises a configuration response result information, especially indicating a positive or negative result of reception and storing or removal of no-transmission zone configuration parameters.

It is thereby advantageously possible to realize and implement the inventive method in a comparatively simple and efficient manner.

According to the present invention, it is furthermore advantageously possible and preferred that the no-transmission zone notification message comprises:
-- an uncrewed aerial system identifier information,
-- an information regarding, or indicating, whether transmission is switched on or off,
-- an information regarding, or indicating, time,
-- an information regarding, or indicating, location information and altitude.

It is thereby advantageously possible to realize and implement the inventive method in a comparatively simple and efficient manner.

According to the present invention, it is furthermore advantageously possible and preferred that, in case of a change of uncrewed aerial system service supplier, USS, the communication between the uncrewed aerial system application enabler server and the uncrewed aerial system application enabler client comprises:
-- a no-transmission zone policy request message that is transmitted by the uncrewed aerial system application enabler client and received by the uncrewed aerial system application enabler server,
-- a no-transmission zone policy response message that is transmitted by the uncrewed aerial system application enabler server and received by the uncrewed aerial system application enabler client.

It is thereby advantageously possible to realize and implement the inventive method in a comparatively simple and efficient manner.

According to the present invention, it is furthermore advantageously possible and preferred that the no-transmission zone policy response message and/or a policy information of, or regarding, the uncrewed aerial system service supplier, USS, comprises:
-- an information regarding, or indicating, an area for deactivation transmission, and a specific altitude,
-- a specific time window for deactivating of transmission,
-- an information regarding, or indicating, frequency bands,
-- a reporting configuration information.

It is thereby advantageously possible to realize and implement the inventive method in a comparatively simple and efficient manner.

Furthermore, the present invention relates to a system or to a telecommunications network for using a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to at least one uncrewed aerial system user equipment,
wherein a service enabler architecture layer server, an uncrewed aerial system application enabler server, and a uncrewed aerial system application specific server are used and the at least one uncrewed aerial system user equipment comprises, respectively, an uncrewed aerial system application specific client, an uncrewed aerial system application enabler client, and a service enabler architecture layer client, wherein, in order for managing no-transmission zone communication and/or for providing no-transmission zone information to the at least one uncrewed aerial system user equipment, the system of telecommunications network is configured such that the uncrewed aerial system application specific server communicates with the uncrewed aerial system application enabler server, and the uncrewed aerial system application enabler server communicates with the uncrewed aerial system application enabler client.

Additionally, the present invention relates to an uncrewed aerial system user equipment for being used with a service enabler architecture layer for verticals, SEAL, and an uncrewed aerial system application enabler layer, UAE layer, with an uncrewed aerial system application specific layer implementation for managing no-transmission zone communication and/or for providing no-transmission zone information to the uncrewed aerial system user equipment,
wherein a service enabler architecture layer server, an uncrewed aerial system application enabler server, and a uncrewed aerial system application specific server are used and wherein the at least one uncrewed aerial system user equipment comprises, respectively, an uncrewed aerial system application specific client, an uncrewed aerial system application enabler client, and a service enabler architecture layer client,
wherein, in order for managing no-transmission zone communication and/or for providing no-transmission zone information to the at least one uncrewed aerial system user equipment, the uncrewed aerial system user equipment is configured such that the uncrewed aerial system application specific server communicates with the uncrewed aerial system application enabler server, and the uncrewed aerial system application enabler server communicates with the uncrewed aerial system application enabler client.

Additionally, the present invention relates to a program comprising a computer readable program code which, when executed on a computer and/or on an uncrewed aerial system user equipment and/or on a network node of a telecommunications network and/or on an uncrewed aerial system application specific server and/or on an uncrewed aerial system application enabler server and/or on an uncrewed aerial system application enabler client, and/or in part on a network node of a telecommunications network and/or in part on an uncrewed aerial system application specific server and/or in part on an uncrewed aerial system application enabler server and/or in part on an uncrewed aerial system application enabler client, causes the computer and/or the uncrewed aerial system user equipment and/or the network node of a telecommunications network and/or the uncrewed aerial system application specific server and/or the uncrewed aerial system application enabler server and/or the uncrewed aerial system application enabler client to perform the inventive method.

Additionally, the present invention relates to a computer-readable medium comprising instructions which when executed on a computer and/or on an uncrewed aerial system user equipment and/or on a network node of a telecommunications network and/or on an uncrewed aerial system application specific server and/or on an uncrewed aerial system application enabler server and/or on an uncrewed aerial system application enabler client, and/or in part on a network node of a telecommunications network and/or in part on an uncrewed aerial system application specific server and/or in part on an uncrewed aerial system application enabler server and/or in part on an uncrewed aerial system application enabler client, causes the computer and/or the uncrewed aerial system user equipment and/or the network node of a telecommunications network and/or the uncrewed aerial system application specific server and/or the uncrewed aerial system application enabler server and/or the uncrewed aerial system application enabler client to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

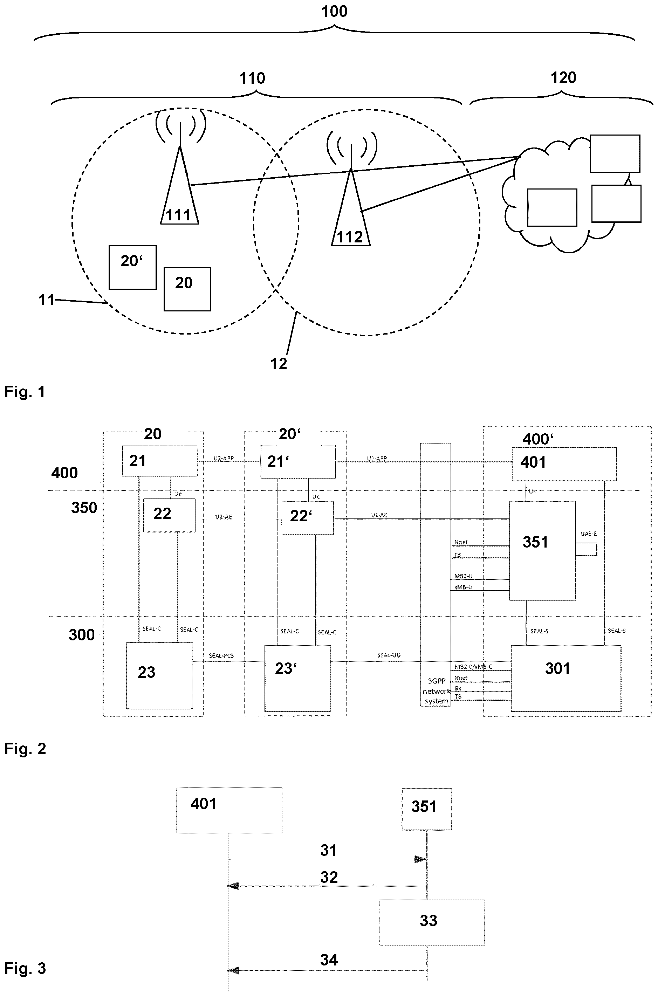

Figure 1 schematically illustrates a telecommunications network, comprising an access network and a core network, and a user equipment, wherein a service enabler architecture layer for verticals, SEAL, and an uncrewed aerial system application enabler layer, UAE layer, is used with an uncrewed aerial system application specific layer implementation for managing no-transmission zone communication and/or for providing no-transmission zone information to at least one uncrewed aerial system user equipment; the uncrewed aerial system user equipment is a uncrewed aerial system user equipment comprising an uncrewed aerial system application specific client, an uncrewed aerial system application enabler client, and a service enabler architecture layer client.
Figure 2 schematically illustrates a representation of an exemplary implementation of the service enabler architecture layer for verticals (together with the uncrewed aerial system application enabler layer, UAE layer, and the uncrewed aerial system application specific layer implementation) for managing no-transmission zone communication and/or for providing no-transmission zone information to the at least one uncrewed aerial system user equipment.
Figure 3 schematically illustrates a representation of the communication of the uncrewed aerial system application specific server with the uncrewed aerial system application enabler server.
Figure 4 schematically illustrates a representation of the communication of the uncrewed aerial system application enabler server with the uncrewed aerial system application enabler client.
Figure 5 schematically illustrates a communication diagram between the uncrewed aerial system application enabler server, the uncrewed aerial system application specific server, and the uncrewed aerial system application enabler client.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising an access network 110 and a core network 120, and a (first) user equipment 20 (as well as a (second) user equipment 20') is schematically shown.

A service enabler architecture layer for verticals, SEAL, is used with an uncrewed aerial system application enabler layer, UAE layer, with an uncrewed aerial system application specific layer implementation for managing no-transmission zone communication and/or for providing no-transmission zone information to at least one uncrewed aerial system user equipment 20, 20'.

The uncrewed aerial system user equipment 20, 20' uses services provided by a uncrewed aerial system application specific layer implementation, i.e. typically a service provider domain, being typically (but not necessarily) external to the telecommunications network 100.

The telecommunications network 100 is especially realized as mobile (cellular) communication network 100. The telecommunications network 100, especially its core network 120, typically comprises a number of network functions or services that are, however and for the sake of simplification, not explicitly and separately indicated, in Figure 1, by means of reference signs. The access network 110 of the telecommunications network 100 exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the uncrewed aerial system user equipment 20 (if connected to or with the telecommunications network 100) is connected, via a radio interface or air interface, to the first base station entity 111 of the access network 110 of the telecommunications network 100.

According to the present invention, the uncrewed aerial system user equipment 20 is an uncrewed aerial system user equipment comprising an uncrewed aerial system application specific client 21 - not explicitly and separately shown in Figure 1 by means of a reference sign -, an uncrewed aerial system application enabler client 22 - likewise not separately shown in Figure 1 by means of a reference sign -, and a service enabler architecture layer client 23 (not shown, in Figure 1, either).

The uncrewed aerial system user equipment 20 is typically a mobile user equipment, namely as part of a uncrewed aerial system or uncrewed aerial vehicle.

The radio cells 11, 12 are typically - but not necessarily - static radio cells 11, 12, typically corresponding to static (but not necessarily) base station entities 111, 112 of the access network 110.

According to the present invention, it is advantageously possible to use the uncrewed aerial system user equipment 20 in relation to or in the framework of service enabler architecture layer for verticals, SEAL, with the telecommunications network 100.

In Figure 2, a representation of an exemplary implementation of the service enabler architecture layer for verticals, SEAL, 300 (together with the uncrewed aerial system application enabler layer, UAE layer, 350 and the uncrewed aerial system application specific layer implementation 400) for managing no-transmission zone communication and/or for providing no-transmission zone information to the at least one uncrewed aerial system user equipment 20, 20' is schematically shown.

The uncrewed aerial system user equipment 20 (or, first uncrewed aerial system user equipment) is represented as comprising a corresponding uncrewed aerial system application specific client 21, a corresponding uncrewed aerial system application enabler client 22, and a corresponding service enabler architecture layer client 23. Furthermore, the uncrewed aerial system user equipment 20' (or, second uncrewed aerial system user equipment) is represented as comprising a corresponding (further) uncrewed aerial system application specific client 21', a corresponding (further) uncrewed aerial system application enabler client 22', and a corresponding (further) service enabler architecture layer client 23'. In the context of the present invention, the uncrewed aerial system user equipments 20, 20' are also designated by means of uncrewed aerial vehicles or UAV-C.

The service enabler architecture layer for verticals, SEAL, 300 comprises a service enabler architecture layer server 301, and, preferably the service enabler architecture layer client 23 (of the uncrewed aerial system user equipment 20) as well the (further) service enabler architecture layer client 23' (of the uncrewed aerial system user equipment 20'). The uncrewed aerial system application enabler layer, UAE layer, 350 comprises an uncrewed aerial system application enabler server 351, and, preferably the uncrewed aerial system application enabler client 22 (of the uncrewed aerial system user equipment 20) as well the (further) uncrewed aerial system application enabler client 22' (of the uncrewed aerial system user equipment 20'). The uncrewed aerial system application specific layer implementation 400 comprises an uncrewed aerial system application specific server 401, and, preferably the uncrewed aerial system application specific client 21 (of the uncrewed aerial system user equipment 20) as well the (further) uncrewed aerial system application specific client 21' (of the uncrewed aerial system user equipment 20'). Together, the service enabler architecture layer server 301, the uncrewed aerial system application enabler server 351 as well as the uncrewed aerial system application specific server 401 are also designated by the term uncrewed aerial system application server 400'.

The uncrewed aerial system application specific client 21 (as well as the (further) uncrewed aerial system application specific client 21') communicates with the uncrewed aerial system application enabler client 22 (or the further uncrewed aerial system application enabler client 22', respectively) using a Uc interface or reference point.

The service enabler architecture layer client 23 communicates with both the uncrewed aerial system application specific client 21 and the uncrewed aerial system application enabler client 22 using a SEAL-C interface or reference point (and, likewise, the (further) service enabler architecture layer client 23' communicates with both the (further) uncrewed aerial system application specific client 21' and the (further) uncrewed aerial system application enabler client 22' using a SEAL-C interface or reference point.

The uncrewed aerial system application specific client 21 communicates with the uncrewed aerial system application specific server 401 using a U1-APP interface or reference point. The (further) uncrewed aerial system application specific client 21' communicates with the uncrewed aerial system application specific server 401 using a U2-APP interface or reference point. The uncrewed aerial system application enabler client 22 communicates with the uncrewed aerial system application enabler server 351 using a U1-AE interface or reference point. The (further) uncrewed aerial system application enabler client 22' communicates with the uncrewed aerial system application enabler server 351 using a U2-AE interface or reference point. The service enabler architecture layer client 23 communicates with the service enabler architecture layer server 301 using a SEAL-UU interface or reference point. The (further) service enabler architecture layer client 23' communicates with the service enabler architecture layer server 301 using a SEAL-UU interface or reference point, and the service enabler architecture layer client 23 communicates with the further service enabler architecture layer client 23' using a SEAL-PC5 interface or reference point.

The uncrewed aerial system application specific server 401 communicates with the uncrewed aerial system application enabler server 351 using a Us interface or reference point. The service enabler architecture layer server 301 communicates with both the uncrewed aerial system application enabler server 351 and the uncrewed aerial system application specific server 401 using a SEAL-S interface or reference point.

The service enabler architecture layer server 301, acting as application function (AF), especially communicates with the telecommunications network 100, especially its core network 120, i.e., typically, 5G core network functions, over one or a plurality of the following interfaces or reference points towards network functions or services of the core network 120 (that are not explicitly shown in Figure 2):
-- an MB2-C/xMB-C interface or reference point (used for multicast communication),
-- a Nnef interface to an network exposure function, NEF, of the core network 120,
-- a Rx interface or reference point,
-- a T8 interface or reference point.

Especially according to the present invention, the uncrewed aerial system application enabler server 351 is also acting as application function (AF), and especially communicates with the telecommunications network 100, especially its core network 120, i.e., typically, 5G core network functions, over one or a plurality of the following interfaces or reference points towards network functions or services of the core network 120 (that are not explicitly shown in Figure 2):
-- an MB2-U interface or reference point ( used for multicast communication),
-- an xMB-U interface or reference point (used for multicast communication),
-- a Nnef interface to an network exposure function, NEF, of the core network 120,
-- a T8 interface or reference point.

It is to be understood, that a plurality of uncrewed aerial system application specific servers 401 (corresponding to the uncrewed aerial system application specific server 401) are able to be present and part of the uncrewed aerial system application specific layer implementation 400 (but are not represented in Figure 2 for the sake of simplicity).

In Figure 3, a representation of the communication of the uncrewed aerial system application specific server 401 with the uncrewed aerial system application enabler server 351 is schematically shown. The communication between the uncrewed aerial system application specific server 401 and the uncrewed aerial system application enabler server 351 comprises - in a first processing step 31 - a no-transmission zone management request message that is transmitted by the uncrewed aerial system application specific server 401 and received by the uncrewed aerial system application enabler server 351, and - in a second processing step 32 - a no-transmission zone management response message that is transmitted by the uncrewed aerial system application enabler server 351 and received by the uncrewed aerial system application specific server 401. In a third processing step 33, the uncrewed aerial system application enabler server 351 stores or removes the corresponding no-transmission zone policy or no-transmission zone policy information, and - in a fourth processing step 34 - a no-transmission zone management complete message is transmitted by the uncrewed aerial system application enabler server 351 and received by the uncrewed aerial system application specific server 401.

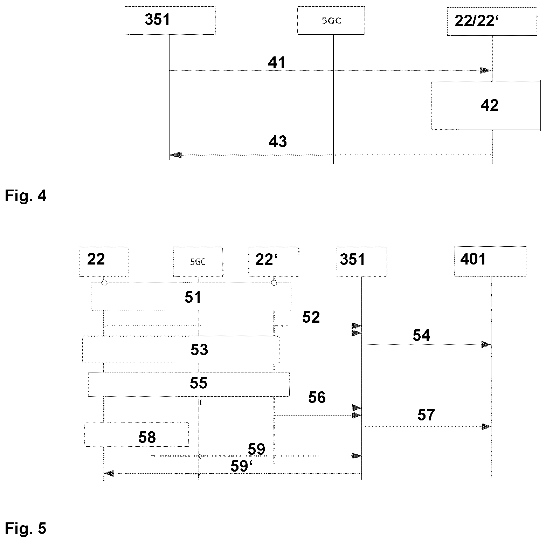

Especially, the communication between the uncrewed aerial system application specific server 401 and the uncrewed aerial system application enabler server 351 also comprises an no-transmission zone notification message (cf. Figure 5) that is transmitted by the uncrewed aerial system application enabler server 351 and received by the uncrewed aerial system application specific server 401.

Especially according to the present invention, the no-transmission zone management request message comprises:
-- an uncrewed aerial system application specific server identifier information, UASS ID,
-- an information regarding, or indicating, an area and altitude for deactivation transmission, specific time window
-- an information regarding, or indicating, frequency bands,
-- a reporting configuration information,
wherein the no-transmission zone management request message optionally comprises:
-- an no-transmission zone policy management container.

Especially according to the present invention, the no-transmission zone management response message comprises a management response result information, especially indicating a positive or negative result of the no-transmission zone management request message and/or
wherein the no-transmission zone management complete message comprises a management complete result information, especially indicating a positive or negative result of no-transmission zone configuration.

In Figure 4, a representation of the communication of the uncrewed aerial system application enabler server 351 with the uncrewed aerial system application enabler client 22/22' is schematically shown (using the telecommunications network 100, represented by the reference sign 5GC, representing the core network 120). The communication between the uncrewed aerial system application enabler server 351 and the uncrewed aerial system application enabler client 22/22' comprises - in a first processing step 41 - a no-transmission zone configuration request message that is transmitted by the uncrewed aerial system application enabler server 351 and received by the uncrewed aerial system application enabler client 22/22'. In a second processing step 42, the uncrewed aerial system application enabler client 22/22' stores or removes the corresponding no-transmission zone parameters or no-transmission zone parameter information, and - in a third processing step 43 - a no-transmission zone configuration response message is transmitted by the uncrewed aerial system application enabler client 22/22' and received by the uncrewed aerial system application enabler server 351.

In Figure 5, a communication diagram between the uncrewed aerial system application enabler server 351, the uncrewed aerial system application specific server 401, and the uncrewed aerial system application enabler client 22/22' (via the telecommunications network 100) is schematically shown.

In a first processing step 51, detection of the uncrewed aerial vehicle 20, 20' approaching the no-transmission zone is performed (or happens). In a second processing step 52, an no-transmission zone notification message is sent (by the uncrewed aerial system user equipment 20, 20' to the uncrewed aerial system application enabler server 351. In a third processing step 53, the uncrewed aerial vehicle or uncrewed aerial system user equipment 20, 20' stops transmission according to the no-transmission zone rules or policies. In a fourth processing step 54, the uncrewed aerial system application enabler server 351 transmits a no-transmission zone notification message that is received by the uncrewed aerial system application specific server 401.

In a fifth processing step 55, the uncrewed aerial vehicle 20, 20' detects that it is out of the no-transmission zone and starts transmission. In a sixth processing step 56, an no-transmission zone notification message is sent (by the uncrewed aerial system user equipment 20, 20' to the uncrewed aerial system application enabler server 351. In a seventh processing step 57, the uncrewed aerial system application enabler server 351 transmits a no-transmission zone notification message that is received by the uncrewed aerial system application specific server 401.

In case of a change of uncrewed aerial system service supplier, USS, the communication between the uncrewed aerial system application enabler server 351 and the uncrewed aerial system application enabler client 22, 22' furthermore comprises - in a ninth processing step 59 - a no-transmission zone policy request message that is transmitted by the uncrewed aerial system application enabler client 22, 22' and received by the uncrewed aerial system application enabler server 351, and - in a tenth processing step 59' - a no-transmission zone policy response message that is transmitted by the uncrewed aerial system application enabler server 351 and received by the uncrewed aerial system application enabler client 22, 22'.

Especially according to the present invention, the no-transmission zone policy response message and/or a policy information of, or regarding, the uncrewed aerial system service supplier, USS comprises:
-- an information regarding, or indicating, an area and altitude for deactivation transmission, specific time window
-- an information regarding, or indicating, frequency bands,
-- a reporting configuration information.

According to the present invention, it is advantageously possible to assure that the UAV UE is able to be restricted to transmit only in (or using) specific frequencies (or in specific frequency bands) when located in specific geographic areas. It is expected that the UAV UE executes specific policy configured in it. According to the present invention, a solution is provided how to configure such policy in UAV UE, especially based on the existing specification TS23.255 Application layer support for Uncrewed Aerial System (UAS).

The UAV and UAV-C - i.e. uncrewed aerial system user equipments - shall be configured not to use specific frequency when in no-transmission zone. When reaching a specific geographical area (where the transmission is forbidden (or restricted) because of the no-transmission zone policy), the UEs (UAE client, UAV, UAV-C) will stop transmitting (stop using the forbidden frequency for transmission). The uncrewed aerial system user equipment 20, 20' is expected to periodically check its location and when entering such zone to stop using the specific forbidden frequency for its transmission. If there is a need to send data towards network, the uncrewed aerial system user equipment 20, 20' will try to use other frequencies to connect to the network, except the forbidden frequency or frequencies. If such other frequencies are not available, the uncrewed aerial system user equipment 20, 20' will store its information for transmission until after the uncrewed aerial system user equipment 20, 20' leaves the no-transmission zone area. When the uncrewed aerial system user equipment 20, 20' is not in the no-transmission zone area anymore, it will continue to communicate.

The UAS application specific server/UTM can provide NTZ policy towards the UAE server for configuring UEs which are registered to the UAE server for the whole area of responsibility of UAE server. The UAE server would receive all the restricted areas and specific no transmit frequencies for these areas from the UAS application specific server (UTM) according to Figure 3.

The UAE server will send NTZ configuration request towards all the UEs registered within the UAE server using the procedure according to Figure 4.

After the UAE client is configured, when it detects approaching NTZ it should send notification and stop transmission. After leaving NTZ it should start transmission and send notification according to Figure 5.

## Claims

1. Method for using a service enabler architecture layer for verticals, SEAL, (400) and an uncrewed aerial system application enabler layer, UAE layer, (350) with an uncrewed aerial system application specific layer (400) implementation for managing no-transmission zone communication and/or for providing no-transmission zone information to at least one uncrewed aerial system user equipment (20, 20'),
wherein a service enabler architecture layer server (301), an uncrewed aerial system application enabler server (351), and a uncrewed aerial system application specific server (401) are used and the at least one uncrewed aerial system user equipment (20, 20') comprises, respectively, an uncrewed aerial system application specific client (21, 21'), an uncrewed aerial system application enabler client (22, 22'), and a service enabler architecture layer client (23, 23'), wherein, in order for managing no-transmission zone communication and/or for providing no-transmission zone information to the at least one uncrewed aerial system user equipment (20, 20'), the method comprises the following steps:
-- in a first step, the uncrewed aerial system application specific server (401) communicates with the uncrewed aerial system application enabler server (351),
-- in a second step, the uncrewed aerial system application enabler server (351) communicates with the uncrewed aerial system application enabler client (22, 22').

2. Method according to claim 1, wherein the communication between the uncrewed aerial system application specific server (401) and the uncrewed aerial system application enabler server (351) comprises
-- a no-transmission zone management request message that is transmitted by the uncrewed aerial system application specific server (401) and received by the uncrewed aerial system application enabler server (351), and
-- a no-transmission zone management response message and a no-transmission zone management complete message that are transmitted by the uncrewed aerial system application enabler server (351) and received by the uncrewed aerial system application specific server (401),
wherein especially, the communication between the uncrewed aerial system application specific server (401) and the uncrewed aerial system application enabler server (351) comprises an no-transmission zone notification message that is transmitted by the uncrewed aerial system application enabler server (351) and received by the uncrewed aerial system application specific server (401).

3. Method according to one of the preceding claims, wherein the communication between the uncrewed aerial system application enabler server (351) and the uncrewed aerial system application enabler client (22, 22') comprises
-- a no-transmission zone configuration request message that is transmitted by the uncrewed aerial system application enabler server (351) and received by the uncrewed aerial system application enabler client (22, 22'), and
-- a no-transmission zone configuration response message that is transmitted by the uncrewed aerial system application enabler client (22, 22') and received by the uncrewed aerial system application enabler server (351).

4. Method according to one of the preceding claims, wherein the no-transmission zone management request message comprises:
-- an uncrewed aerial system application specific server identifier information, UASS ID,
-- an information regarding, or indicating, an area for deactivation transmission and a specific altitude,
-- a specific time window for deactivating the transmission,
-- an information regarding, or indicating, frequency bands,
-- a reporting configuration information,
wherein the no-transmission zone management request message optionally comprises:
-- an no-transmission zone policy management container.

5. Method according to one of the preceding claims, wherein the no-transmission zone management response message comprises a management response result information, especially indicating a positive or negative result of the no-transmission zone management request message and/or wherein the no-transmission zone management complete message comprises a management complete result information, especially indicating a positive or negative result of no-transmission zone configuration.

6. Method according to one of the preceding claims, wherein the no-transmission zone configuration request message comprises:
-- uncrewed aerial system identifier information,
-- an information regarding, or indicating, an area for deactivation transmission, and a specific altitude,
-- specific time window for deactivating of transmission,
-- an information regarding, or indicating, frequency bands,
-- a reporting configuration information,
wherein the no-transmission zone configuration request message optionally comprises:
-- an no-transmission zone configuration information.

7. Method according to one of the preceding claims, wherein the no-transmission zone configuration response message comprises a configuration response result information, especially indicating a positive or negative result of reception and storing or removal of no-transmission zone configuration parameters.

8. Method according to one of the preceding claims, wherein the no-transmission zone notification message comprises:
-- an uncrewed aerial system identifier information,
-- an information regarding, or indicating, whether transmission is switched on or off,
-- an information regarding, or indicating, time,
-- an information regarding, or indicating, location information and altitude.

9. Method according to one of the preceding claims, wherein, in case of a change of uncrewed aerial system service supplier, USS, the communication between the uncrewed aerial system application enabler server (351) and the uncrewed aerial system application enabler client (22, 22') comprises:
-- a no-transmission zone policy request message that is transmitted by the uncrewed aerial system application enabler client (22, 22') and received by the uncrewed aerial system application enabler server (351),
-- a no-transmission zone policy response message that is transmitted by the uncrewed aerial system application enabler server (351) and received by the uncrewed aerial system application enabler client (22, 22').

10. Method according to one of the preceding claims, wherein the no-transmission zone policy response message and/or a policy information of, or regarding, the uncrewed aerial system service supplier, USS, comprises:
-- an information regarding, or indicating, an area for deactivation transmission and a specific altitude,
-- a specific time window for deactivating of transmission,
-- an information regarding, or indicating, frequency bands,
-- a reporting configuration information.

11. System or telecommunications network (100) for using a service enabler architecture layer for verticals, SEAL, (400) and an uncrewed aerial system application enabler layer, UAE layer, (350) with an uncrewed aerial system application specific layer (400) implementation for managing no-transmission zone communication and/or for providing no-transmission zone information to at least one uncrewed aerial system user equipment (20, 20'),
wherein a service enabler architecture layer server (301), an uncrewed aerial system application enabler server (351), and a uncrewed aerial system application specific server (401) are used and the at least one uncrewed aerial system user equipment (20, 20') comprises, respectively, an uncrewed aerial system application specific client (21, 21'), an uncrewed aerial system application enabler client (22, 22'), and a service enabler architecture layer client (23, 23'),
wherein, in order for managing no-transmission zone communication and/or for providing no-transmission zone information to the at least one uncrewed aerial system user equipment (20, 20'), the system or telecommunications network (100) is configured such that the uncrewed aerial system application specific server (401) communicates with the uncrewed aerial system application enabler server (351), and the uncrewed aerial system application enabler server (351) communicates with the uncrewed aerial system application enabler client (22, 22').

12. Uncrewed aerial system user equipment (20, 20') for being used with a service enabler architecture layer for verticals, SEAL, (400) and an uncrewed aerial system application enabler layer, UAE layer, (350) with an uncrewed aerial system application specific layer (400) implementation for managing no-transmission zone communication and/or for providing no-transmission zone information to the uncrewed aerial system user equipment (20, 20'),
wherein a service enabler architecture layer server (301), an uncrewed aerial system application enabler server (351), and a uncrewed aerial system application specific server (401) are used and wherein the at least one uncrewed aerial system user equipment (20, 20') comprises, respectively, an uncrewed aerial system application specific client (21, 21'), an uncrewed aerial system application enabler client (22, 22'), and a service enabler architecture layer client (23, 23'), wherein, in order for managing no-transmission zone communication and/or for providing no-transmission zone information to the at least one uncrewed aerial system user equipment (20, 20'), the uncrewed aerial system user equipment (20, 20') is configured such that the uncrewed aerial system application specific server (401) communicates with the uncrewed aerial system application enabler server (351), and the uncrewed aerial system application enabler server (351) communicates with the uncrewed aerial system application enabler client (22, 22').

13. Program comprising a computer readable program code which, when executed on a computer and/or on an uncrewed aerial system user equipment (20, 20') and/or on a network node of a telecommunications network (100) and/or on an uncrewed aerial system application specific server (401) and/or on an uncrewed aerial system application enabler server (351) and/or on an uncrewed aerial system application enabler client (22, 22'), and/or in part on a network node of a telecommunications network (100) and/or in part on an uncrewed aerial system application specific server (401) and/or in part on an uncrewed aerial system application enabler server (351) and/or in part on an uncrewed aerial system application enabler client (22, 22'), causes the computer and/or the uncrewed aerial system user equipment (20, 20') and/or the network node of a telecommunications network (100) and/or the uncrewed aerial system application specific server (401) and/or the uncrewed aerial system application enabler server (351) and/or the uncrewed aerial system application enabler client (22, 22') to perform a method according one of claims 1 to 10.

14. Computer-readable medium comprising instructions which when executed on a computer and/or on an uncrewed aerial system user equipment (20, 20') and/or on a network node of a telecommunications network (100) and/or on an uncrewed aerial system application specific server (401) and/or on an uncrewed aerial system application enabler server (351) and/or on an uncrewed aerial system application enabler client (22, 22'), and/or in part on a network node of a telecommunications network (100) and/or in part on an uncrewed aerial system application specific server (401) and/or in part on an uncrewed aerial system application enabler server (351) and/or in part on an uncrewed aerial system application enabler client (22, 22'), causes the computer and/or the uncrewed aerial system user equipment (20, 20') and/or the network node of a telecommunications network (100) and/or the uncrewed aerial system application specific server (401) and/or the uncrewed aerial system application enabler server (351) and/or the uncrewed aerial system application enabler client (22, 22') to perform a method according to one of claims 1 to 10.
